Europäisches Patentamt

(19) European Patent Office

Office européen des brevets

(11) Veröffentlichungsnummer : **0 377 097 B1**

(12) **EUROPÄISCHE PATENTSCHRIFT**

(45) Veröffentlichungstag der Patentschrift :
29.01.92 Patentblatt 92/05

(51) Int. Cl.⁵ : **B62D 1/04**, G01B 21/22

(21) Anmeldenummer : **89120231.9**

(22) Anmeldetag : **01.11.89**

(54) **Lenkwinkelsensor für ein Kraftfahrzeug.**

(30) Priorität : **02.11.88 DE 3837111**

(43) Veröffentlichungstag der Anmeldung :
**11.07.90 Patentblatt 90/28**

(45) Bekanntmachung des Hinweises auf die
Patenterteilung :
**29.01.92 Patentblatt 92/05**

(84) Benannte Vertragsstaaten :
**DE ES FR GB IT SE**

(56) Entgegenhaltungen :
**EP-A- 0 117 611**
**DE-A- 1 928 613**
**DE-A- 3 119 414**
**DE-A- 3 423 664**
**FR-A- 2 595 461**
**GB-A- 2 024 122**

(73) Patentinhaber : **DAIMLER-BENZ**
**AKTIENGESELLSCHAFT**
**Mercedesstrasse 136**
**W-7000 Stuttgart 60 (DE)**

(72) Erfinder : **Kaminski, Detlef, Dipl.-Ing.**
**Daimlerstrasse 18**
**W-7014 Kornwestheim (DE)**
Erfinder : **Schmitfranz, Bernd-Heinrich,**
**Dipl.-Ing. (FH)**
**Schlehenweg 27**
**W-7300 Esslingen (DE)**
Erfinder : **Schnell, Josef**
**Hege 16**
**W-8992 Wasserburg (DE)**
Erfinder : **Adomat, Rolf, Dipl.-Ing.**
**Saint-die-Strasse 14**
**W-7990 Friedrichshafen (DE)**
Erfinder : **Lüthin, Uwe**
**Goethestrasse 38**
**W-7993 Kressbronn (DE)**
Erfinder : **Ulke, Walter, Dipl.-Ing.**
**Riedheimerstrasse 43**
**W-7990 Friedrichshafen Efrizweiler (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Bestimmung des Drehwinkels eines Fahrzeuglenkrades mit einem lenkradseitig angeordneten Ring, welcher eine einspurige Streifenstruktur mit zur Lenksäule parallelen Streifen aufweist, sowie mit einer außerhalb bzw. innerhalb des Ringes angeordneten stationären Sensoranordnung, die mit dem Streifen zur Drehwinkelbestimmung zusammenwirkt.

Bei einer aus der GB-A 2024122 bekannten derartigen Vorrichtung ist das Lenkrad antriebsmäßig mit einem zur Lenkwelle konzentrischen Teller od.dgl. verbunden, an dem ein Stirnverzahnungsring angeordnet ist, der seinerseits mit einer stationären Sensoranordnung zusammenwirkt. Die Zähne des Stellverzahnungsringes bilden zusammen mit den Zahnlücken eine Streifenstruktur mit zur Lenksäule parallelen Streifen. Bei Drehung des Lenkrades laufen die Zähne des Stirnverzahnungsringes (bzw. die Lücken zwischen den Zähnen) an der Sensoranordnung vorbei, welche als Lichtschrankensensor ausgebildet sein kann. Je nachdem, ob sich einer der Zähne oder eine Zahnlücke im Lichtweg befindet, wird der Lichtweg freigegeben oder unterbrochen. Damit kann aus der Zahl der bei einer Lenkraddrehung an der Sensoranordnung vorbeilaufenden Zähne auf die Größe der Winkelverzahnung des Lenkrades geschlossen werden.

Bei dieser bekannten Vorrichtung erfolgt also die Drehwinkelbestimmung durch die Zählung von Streifen (Zähne oder Zahnlücken des Stirnverzahnungsrades). Dies hat zur Folge, daß der jeweils ermittelte Wert des Drehwinkels "vergessen" werden kann, wenn die Energieversorgung der Vorrichtung eine Störung aufweist bzw. von der Vorrichtung abgekoppelt wird.

Im übrigen ist bei der bekannten Vorrichtung notwendig, daß der Stirnverzahnungsring bezüglich der Sensoranordnung relativ genau justiert angeordnet wird, um eine fehlerfreie Zählung der Zähne bzw. Zahnlücken durch die Sensoranordnung zu ermöglichen.

Aufgabe der Erfindung ist es nun, zur Bestimmung des Drehwinkels eines Fahrzeuglenkrades eine Vorrichtung zu schaffen, welche sich durch besonders hohe Betriebssicherheit auszeichnet, wobei insbesondere gewährleistet sein soll, daß Unterbrechungen einer elektrischen Betriebsspannung sowie eventuelle Toleranzen bei der Montage zu keinerlei Fehlern bei der Drehwinkelermittlung führen können.

Diese Aufgabe wird erfindungsgemäß dadurch gelöst, daß die Sensoranordnung mehrfach, in Winkelabständen angeordnete Sensoren aufweist und die Streifenstruktur einen solchen Code bildet, der im Zusammenwirken mit den Sensoren eine Absolutwerterkennung ermöglicht, und daß die Streifen — in Parallelrichtung zur Lenksäule — eine solche Höhe besitzen, daß auch bei Ausnutzung von Einbautoleranzen ein sicheres Zusammenwirken mit den Sensoren gewährleistet ist. Die Erfindung läßt sich in einfacher Weise konstruktiv verwirklichen, wie nachfolgend beispielhaft erläutert wird.

Am vorgegebenen Lenkrad wird eine Vorrichtung mit umlaufenden Ring vorgesehen und befestigt, wobei der Ring parallel zur Lenksäule ausgebildet ist. In diesen Ring ist der auf die Auflösung angepasste Streifencode vorzugsweise durch Aussparungen in vorgegebener Breite eingearbeitet. So ist dort eine Aussparung vorgesehen, wo der digitale Code eine "0" vorsieht und bei einer "1" ist der Ring erhalten geblieben.

Bei einer Auflösung kleiner als 1 Grad ist eine Mindestanzahl von neun Sensoren erforderlich. Um beispielsweise auf eine Winkelauflösung von 0,8 Grad zu kommen, ergibt sich eine Unterteilung des Kreises in 450 Teilstücke. Die Sensoren sind bei der Verwendung eines Streifencodes mit Hilfe von Aussparungen als Gabellichtschranken ausgebildet, wobei der Lichtspalt kleiner als die gewünschte Auflösung ist. Diese Sensoren sind auf dem festen Teil der Lenkung in gleichen Winkelabständen so angeordnet, dass der Ring mit den Aussparungen in die Lichtschrankengabeln eingreifen kann.

Ein Verschmutzen der Aussparungen tritt nicht auf und durch die Länge der Aussparung parallel zur Lenksäule ist gewährleistet, dass auch bei Ausnutzung der Einbautoleranzen des Lenkrades immer eine sichere Anzeige möglich ist. Neben de vorzugsweise vorgeschlagenen Ausgestaltung des Streifencodes mit Hilfe von Aussparungen lassen sich die Streifencodes auch mit einem Reflexkoppler erkennen. Dabei werden statt der Aussparungen reflektierende Streifen entsprechender Breite auf dem Ring vorgesehen. Auf diese Streifen werden Lichtstrahlen gerichtet und durch die Reflexion des Lichts auf das Vorhandensein einer "1" oder "0" geschlossen.

Denkbar und besonders vorteilhaft, da sehr hoch auflösend, ist die Verwendung von CCD-Zeilenkameras. Mit ihnen lassen sich auf dem Ring der am Lenkrad angebrachten Vorrichtung Streifencodes mit einer sehr hohen Auflösung erkennen. Optische Erkennungsverfahren sind gegenüber induktiv, kapazitiv oder mit Ultraschall arbeitenden Systemen dahingehend vorteilhaft, dass sie mit einer höheren Genauigkeit arbeiten und damit eine feinere Unterteilung und Auflösung gewährleisten. Die von den Sensoren gewonnenen Signale werden einer Auswerteschaltung zugeführt, die den Lenkwinkel errechnet.

Mit der zuvor beschriebenen Vorrichtung lässt sich der Drehwinkel einer Lenkradumdrehung sehr genau bestimmen. In Kraftfahrzeugen ist jedoch regelmäßig ein Lenkraddrehwinkel von bis zu ± 600 Grad vorgesehen. Das Lenkrad muß mehrfach gedreht werden, um vom maximalen linken zum maximalen rechten Lenkanschlag zu gelangen. Zur Detektion der Umdrehungsanzahl sind verschiedene Lösungen möglich. Vorzugsweise wird ein zusätzlicher, induktiv arbeitender Sensor "hinter" dem Lenkgetriebe angeordnet, der die Anzahl der Lenkradumdrehungen erkennt. Er muß einen Zusammenhang zwischen dem Lenkraddrehwinkel und dem Lenkwinkel erzeugen, damit erkannt wird, in welcher Lenkradumdrehung der Lenkraddrehwinkel gerade entsteht.

Eine andere Lösung besteht darin, mit Hilfe der Auswerteeinrichtung für den Lenkraddrehwinkel auch die Anzal der Umdrehungen des Lenkrades mitzuzählen. Bei einem Versorgungsspannungsausfall muß die Lenkwinkelmittelstellung wieder neu einjustiert werden, was sich aber über statistische Verfahren errechnen lässt oder die Lenkradextremeinstellungen links und rechts werden mit je einem Taster der Auswerteeinheit mitgeteilt.

Die Erfindung wird anhand von Figuren näher erläutert.

Es zeigen :

Figur 1        eine Codescheibe mit einspurigem Code,
Figur 2        den Streifencode als Ring,
Figur 3a       den Ring der Vorrichtung am Lenkrad in Draufsicht,
Figur 3b       den Ring in Seitenansicht,
Figur 4        schematisch den Ring in einer Gabellichtschranke und
Figur 5        die eingebaute Vorrichtung am Lenkrad.

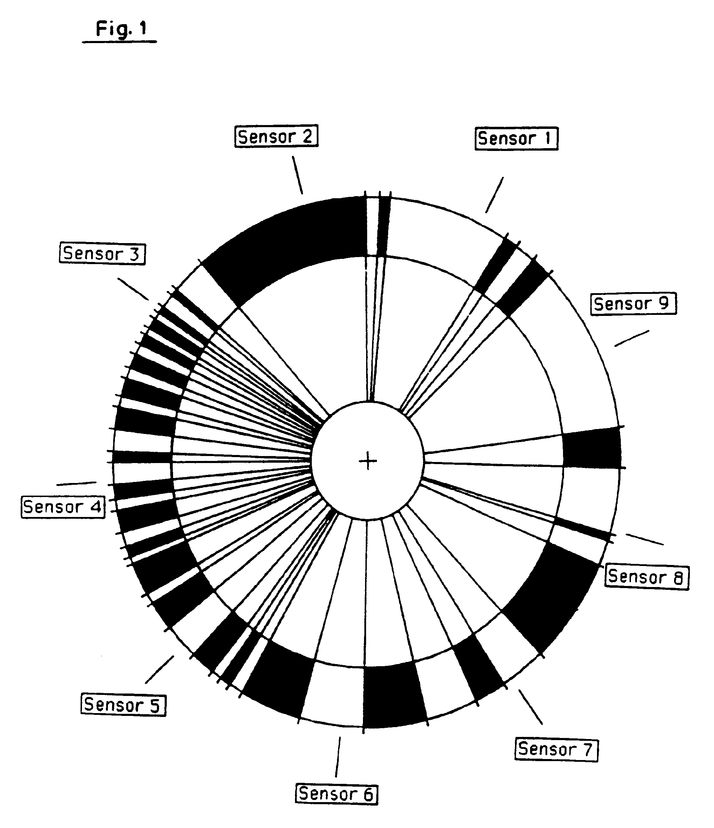

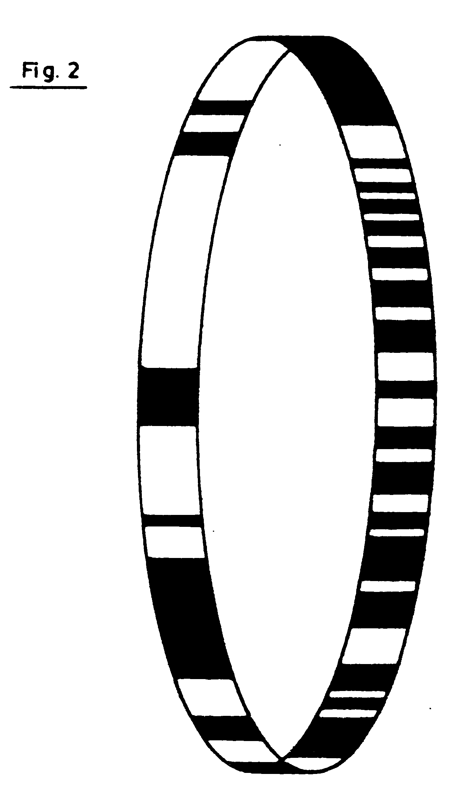

Die Figur 1 zeigt eine Codescheibe für eine Auflösung von 0,8 Grad und eine Unterteilung in 450 Schritte. Für die Ablesung der Codestreifen sind neun Sensoren erforderlich, die im Winkel von 40 Grad angeordnet sind. Hier sind die Codestreifen in die Ebene projiziert dargestellt, in der erfindungsgemässen Vorrichtung befinden sich die Streifen dann in einem Ring wie in den Figuren 2, 3 und 4 erkennbar.

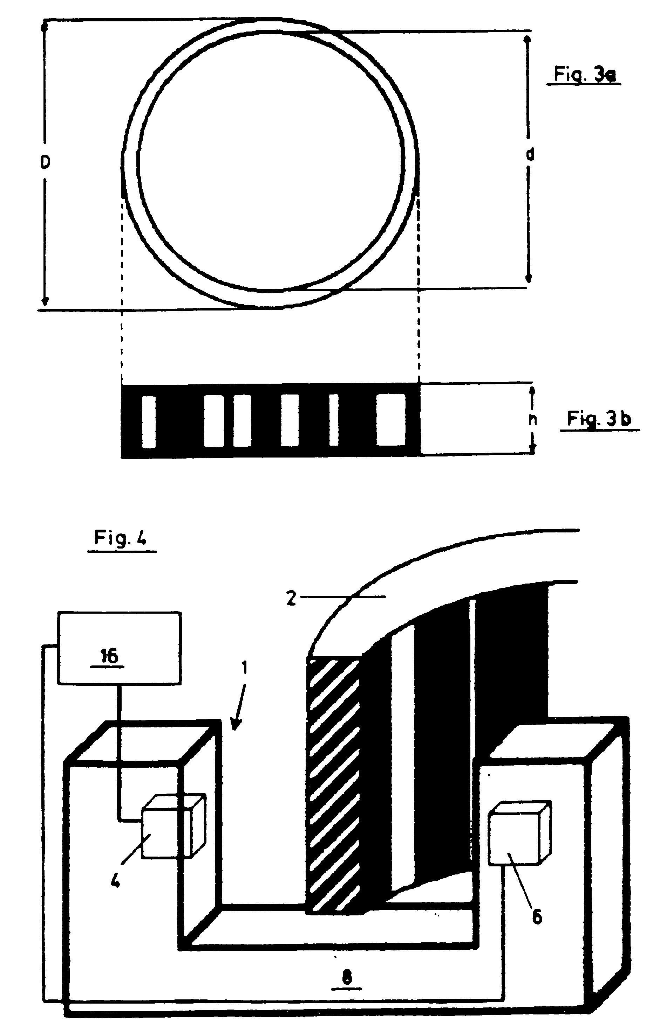

In Figur 3a ist der Ring in Draufsicht mit Aussendurchmesser D und Innendurchmesser d dargestellt.

Eine Projektion in die Seitenansicht stellt Figur 3b dar. Dabei kennzeichnet h die Höhe des Ringes.

Die Befestigung der Vorrichtung mit Ring ist den jeweiligen Gegebenheiten des Lenkrades und des Einbauraumes angepasst und hier nicht gezeigt.

Figur 4 zeigt schematisch eine Gabellichtschranke 1, durch die der mit Streifencode versehene Ring 2 läuft. Sender 4 und Empfänger 6 der Lichtstrahlen sind in einem gemeinsamen Gehäuse 8 untergebracht. Die erforderliche Anzahl an Sensoren dieser Art ist im feststehenden Teil der Lenkung gleichmässig verteilt und so angeordnet, dass der den Streifencode tragende Ring in die Gabeln der Sensoren eingreifen kann. Durch die Höhe der Streifen ist ein sicheres Ablesen auch bei Ausnutzung der Einbautoleranzen gewährleistet. Die Gabellichtschranke 1 ist mit einer Auswerteeinheit 16 zur Berechnung der Drehwinkel verbunden.

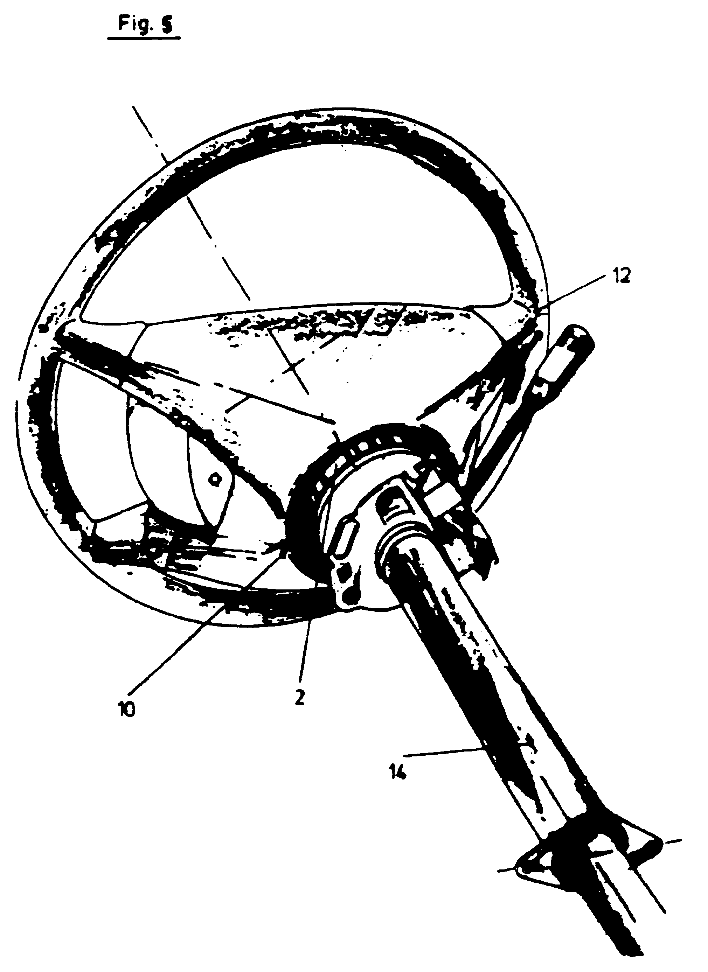

Figur 5 zeigt die erfindungsgemässe Vorrichtung 10 in einem Lenkrad 12 mit Lenksäule 14 eingebaut. Dabei ist zu erkennen, dass der Ring 2 mit dem Streifencode parallel zur Lenksäule 14 angeordnet ist. Die erforderliche Sensoren können ausserhalb des Ringes 2, bei gegebenen Einbauverhältnissen auch innerhalb des Ringes 2 angeordnet sein.

Die erfindungsgemässe Vorrichtung ermöglicht eine Absoluterkennung des Drehwinkels ohne Zählfehler. Das Auswertesystem ist sofort betriebsbereit und es bleibt kein Winkelfehler nach Ausfall der Betriebsspannung. Möglich ist auch, eine Plausibilitätskontrolle der ermittelten Winkel durch einen Mikroprozessor vorzunehmen. Die Winkelcodierung auf einer Spur ermöglicht den Einbau in den vorhandenen Bauraum, wobei grosse Toleranzen in axialer Richtung toleriert werden.

Fehlerhafte Sensoren können durch einen Mikroprozessor softwaremässig erkannt und gegebenenfalls der fehlerhaft ermittelte Wert korrigiert werden. Wird eine Erhöhung der Meßgenauigkeit gefordert, so ist im Gegensatz zu den bekannten Graycode-Verfahren keine weitere Codespur, sondern nur eine Veränderung des bitseriellen Codes auf dem Ring und eventuell eine Erhöhung der Anzahl der Sensorelemente erforderlich.

## Patentansprüche

1. Vorrichtung zur Bestimmung des Drehwinkels eines Fahrzeuglenkrades (12) mit einem lenkradseitig angeordneten Ring (2), welcher eine einspurige Streifenstruktur mit zur Lenksäule (14) parallelen Streifen aufweist, sowie mit einer außerhalb bzw. innerhalb des Ringes (2) angeordneten stationären Sensoranordnung (4, 6, 8), die mit den Streifen zur Drehwinkelbestimmung zusammenwirkt, **dadurch gekennzeichnet**, daß die Sensoranordnung mehrfach, in Winkelabständen angeordnete Sensoren (4, 6, 8) aufweist und die Streifenstruktur einen solchen Code bildet, der im Zusammenwirken mit den Sensoren eine Absolutwerterkennung ermöglicht, und daß die Streifen — in Parallelrichtung zur Lenksäule (14) — eine solche Höhe (h) besitzen, daß auch bei Ausnutzung von Einbautoleranzen ein sicheres Zusammenwirken mit den Sensoren gewährleistet ist.

2. Vorrichtung nach Anspruch 1, dadurch gekennzeichnet, dass der Streifencode durch eine am Lenkrad befestigte Vorrichtung (10) mit einem Ring (2) gebildet ist, in dem Aussparungen vorgegebener Breite vorgesehen sind.

3. Vorrichtung nach Anspruch 1, dadurch gekennzeichnet, dass der Streifencode durch eine am Lenkrad befestigte Vorrichtung (10) mit einem Ring (2) gebildet ist, auf dem Streifen vorgegebener Breite vorgesehen sind.

4. Vorrichtung nach Anspruch 3, dadurch gekennzeichnet, dass die Streifen reflektierend sind.

5. Vorrichtung nach Anspruch 1, dadurch gekennzeichnet, dass die Mittel zur Erkennung des Streifencodes optisch arbeitende Sensoren sind.

6. Vorrichtung nach Anspruch 1, dadurch gekennzeichnet, dass die Mittel zur Erkennung des Streifencodes induktiv arbeitende Sensoren sind.

7. Vorrichtung nach Anspruch 1, dadurch gekennzeichnet, dass die Mittel zur Erkennung des Streifencodes kapazitiv arbeitende Sensoren sind.

8. Vorrichtung nach Anspruch 1, dadurch gekennzeichnet, dass die Mittel zur Erkennung des Streifencodes mit Ultraschall arbeitende Sensoren sind.

9. Vorrichtung nach Anspruch 5, dadurch gekennzeichnet, dass die Sensoren Gabellichtschranken (1) sind.

10. Vorrichtung nach Anspruch 5, dadurch gekennzeichnet, dass die Sensoren Reflexkoppler sind.

11. Vorrichtung nach Anspruch 5, dadurch gekennzeichnet, dass die Sensoren CCD-Zeilenkameras sind.

12. Vorrichtung nach wenigstens einem der vorherigen Ansprüche, dadurch gekennzeichnet, dass die Sensoren in gleichen Winkelabständen um die Lenksäule (14) herum angeordnet sind.

13. Vorrichtung nach Anspruch 1, dadurch gekennzeichnet, dass ein weiterer Sensor zur Erkennung der Lenkradumdrehungen vorgesehen ist.


## Claims

1. Device for determining the angle of rotation of a vehicle steering wheel (12) with a ring (2) which is positioned on the steering wheel and which has a single-track stripe structure with stripes parallel to the steering column (14), as well as with a fixed sensor system (4, 6, 8) which is positioned outside or inside the ring (2) and which interacts with the stripes to determine the angle of rotation, characterized by the fact that the sensor system has a number of sensors (4, 6, 8) positioned at angular distances apart and the stripe structure forms a code which, interacting with the sensors, enables absolute values tobe brecognized, and that the strips, in a direction parallel to the steering column (14), have a height (h) which is such that even when advantage is taken of installation tolerances reliable interaction with the sensors is ensured.

2. Device in accordance with Claim 1, characterized by the fact that the stripe code is formed by a device (10) which is affixed to the steering wheel and which is provided with a ring (2) in which recesses of a preselected with are provided.

3. Device in accordance with Claim 1, characterized by the fact that the stripe code is formed by a device (10) which is affixed to the steering wheel and which is provided with a ring (2) on which stripes of a preselected width are provided.

4. Device in accordance with Claim 3, characterized by the fact that the stripes are reflective.

5. Device in accordance with Claim 1, characterized by the fact that the means for recognition of the stripe code consist of optically operating sensors.

6. Device in accordance with Claim 1, characterized by the fact that the means for recognition of the stripe code consist of inductively operating sensors.

7. Device in accordance with Claim 1, characterized by the fact that the means for recognition of the stripe code consist of capacitatively operating sensors.

8. Device in accordance with Claim 1, characterized byh the fact that the means for recognition of the stripe code consist of ultrasonically operating sensors.

9. Device in accordance with Claim 5, characterized by the fact that the sensors are fork light barriers (1).

10. Device in accordance with Claim 5, characterized by the fact that the sensors are reflex couplers.

11. Device in accordance with Claim 5, characterized by the fact that the sensors are CCD line cameras.

12. Device in accordance with at least one of the foregoing claims, characterized by the fact that the sensors are positioned around the steering column (14) at equal angular distances apart.

13. Device in accordance with Claim 1, characterized by the fact that a further sensor is provided for the recognition of the steering wheel rotations.

**Revendications**

1. Dispositif de détermination de l'angle de rotation du volant (12) d'un véhicule, comprenant un anneau (2) monté sur le volant et comportant une structure à piste unique de raies parallèles à la colonne de direction (14), ainsi qu'un montage de capteurs (4, 6, 8) placés en position fixe à l'extérieur ou à l'intérieur de l'anneau (2) et coopérant avec les raies pour la détermination de l'angle de rotation, caractérisé en ce que le montage de capteurs comprend plusieurs capteurs (4, 6, 8) placés à des distances angulaires et la structure à raies forme un code qui, en coopération avec les capteurs, permet une reconnaissance en valeur absolue et en ce que les raies ont — en direction parallèle à la colonne de direction (14) — une hauteur (h) telle que même lorsque des tolérances de montage sont exploitées, une coopération fiable avec les capteurs soit garantie.

2. Dispositif selon la revendication 1, caractérisé en ce que le code à raies est formé d'un dispositif (10) fixé sur le volant et comprenant un anneau (2) dans lequel sont prévus des évidements de largeur prédéterminée.

3. Dispositif selon la revendication 1, caractérisé en ce que le code à raies est formé d'un dispositif (10) fixé sur le volant et comprenant un anneau (2) sur lequel des raies d'une largeur prédéterminée, sont prévues.

4. Dispositif selon la revendication 3, caractérisé en ce que les raies sont réfléchissantes.

5. Dispositif selon la revendication 1, caractérisé en ce que les moyens de reconnaissance du code à raies sont des capteurs à fonctionnement optique.

6. Dispositif selon la revendication 1, caractérisé en ce que les moyens de reconnaissance du code à raies sont des capteurs à fonctionnement par induction.

7. Dispositif selon la revendication 1, caractérisé en ce que les moyens de reconnaissance du code à raies sont des capteurs à fonctionnement capactif.

8. Dispositif selon la revendication 1, caractérisé en ce que les moyens de reconnaissance du code à raies sont des capteurs fonctionnant par ultra-sons.

9. Dispositif selon la revendication 5, caractérisé en ce que les capteurs sont des barrages photoélectriques en fourche (1).

10. Dispositif selon la revendication 5, caractérisé en ce que les capteurs sont des éléments de couplage par réflexion.

11. Dispositif selon la revendication 5, caractérisé en ce que les capteurs sont des caméras de type CCD.

12. Dispositif selon au moins l'une des revendications précédentes, caractérisé en ce que les capteurs sont disposés à des distances angulaires égales autour de la colonne de direction (14).

13. Dispositif selon la revendication 1, caractérisé en ce qu'un autre capteur est prévu pour la reconnaissance des révolutions du volant.

## Fig. 1

Sensor 2

Sensor 1

Sensor 3

Sensor 9

Sensor 4

Sensor 8

Sensor 5

Sensor 7

Sensor 6

Fig. 2

Fig. 3a

D

d

Fig. 3b

h

Fig. 4

16

1

2

4

6

8

## Fig. 5